# EUROPÄISCHE PATENTSCHRIFT

(11) **EP 3 695 580 B1**
(45) Veröffentlichungstag und Bekanntmachung des Hinweises auf die Patenterteilung: **14.09.2022**
(21) Anmeldenummer: 18773999.0
(22) Anmeldetag: 20.09.2018
(51) Int. Cl.: H04L 65/40, H04W 4/029, G06F 21/88, G01S 5/00, H04L 67/52, G01S 5/02

(54) **VERFAHREN UND SYSTEM ZUM LOKALISIEREN EINES OBJEKTS**
METHOD AND SYSTEM FOR LOCALIZING AN OBJECT
PROCÉDÉ ET SYSTÈME POUR LOCALISER UN OBJET

(30) Priorität: 09.10.2017 DE 102017217932
(43) Veröffentlichungstag der Anmeldung: 19.08.2020
(73) Patentinhaber: Volkswagen Aktiengesellschaft, 38440 Wolfsburg (DE)
(72) Erfinder: ETTE, Bernd, 38442 Wolfsburg (DE); WINTSCHE, Volker, 01099 Dresden (DE)
(86) Internationale Anmeldenummer: PCT/EP2018/075495
(87) Internationale Veröffentlichungsnummer: WO 2019/072518

(56) Entgegenhaltungen:
- WO-A2-2013/163334
- US-A1- 2012 025 973
- US-A1- 2014 035 732
- US-A1- 2014 228 059

## Beschreibung

Die Erfindung betrifft ein Verfahren zum Lokalisieren einer Markiereinheit mittels mehrerer Basiseinheiten. Eine andere Bezeichnung für eine solche Markiereinheit ist auch TAG. Durch das Lokalisieren wird herausgefunden, bei welcher Basiseinheit sich die Markiereinheit aktuell befindet. Zu der Erfindung gehören auch die Markiereinheit und die mehreren Basiseinheiten sowie ein System aus mehreren Basiseinheiten und zumindest einer Markiereinheit.

Mittels einer Markiereinheit kann ein Objekt markiert werden, um dieses indirekt durch Lokalisieren der Markiereinheit wiederzufinden. Ein Beispiel für ein solches Objekt sind jeweils eine Handtasche, ein mobiles Endgerät, ein Portemonnaie, ein Koffer. Die Markiereinheit kann beispielsweise die Form einer Münze oder Anhängers aufweisen und an dem Objekt befestigt und/oder in das Objekt hineingelegt sein. Über eine Funkverbindung kann eine Markiereinheit mit einer Basiseinheit kommunizieren, sodass bei erfolgreicher Kommunikation bekannt ist, bei welcher Basiseinheit die Markiereinheit sich aktuell befindet. Beispiele für eine Basiseinheit sind jeweils ein Kraftfahrzeug, ein mobiles Endgerät und eine Empfangsstation, die beispielsweise in einem Gebäude installiert sein kann.

Mittels eines solchen Systems aus einer Markiereinheit und mehreren Basiseinheiten kann beispielsweise ein gestohlenes oder vermisstes Fahrzeug wieder aufgefunden werden und/oder ein anderer vermisster Gegenstand wieder aufgefunden werden und/oder die Ortung eines Objekts ohne positionsbestimmende Elemente (also ohne Empfänger für ein GNSS - Global Navigation Satellite System) und ohne Antennenortung ermöglicht werden.

Die funkbasierte Kommunikation der Markiereinheit mit der zumindest einen Basiseinheit kann beispielsweise auf der Grundlage von Bluetooth (zum Beispiel Bluetooth UWB - Ultra Wide Band) erfolgen. Damit die Markiereinheit dabei mit dem Objekt mitbewegt oder transportiert werden kann, muss sie eine mobile Energieversorgung aufweisen, das heißt beispielsweise mit einer Batterie betrieben werden. Dies führt aber bei dauerhaftem Betrieb oder Aufrechterhalten der Funkverbindung zu einem unerwünscht schnellen Entladen der Batterie der Markiereinheit. Wenn dagegen aber zum Sparen von Energie die Sendeeinrichtung und Empfangseinrichtung einer Markiereinheit abgeschaltet werden, kann aus Sicht einer Basiseinheit nicht unterschieden werden, ob die Markiereinheit lediglich zum Sparen von Energie die Funkverbindung unterbrochen hat oder ob die Markiereinheit verloren gegangen ist oder gestohlen wurde, also gar nicht in der Nähe ist. Somit ist es mit herkömmlichen Mitteln nicht möglich, in der Markiereinheit deren Sendeeinrichtung und Empfangseinrichtung abzuschalten, ohne dass hierbei eine zweideutige Situation entsteht, weil aus Sicht der mehreren Basiseinheiten nicht zwischen dem Stromspar-Modus und einem Verlust der Markiereinheit unterschieden werden kann.

Aus der DE 10 2014 217 504 A1 ist eine Ortung für einen Gegenstand bekannt, der sich im Bereich eines Kraftfahrzeugs befindet. In Abhängigkeit von einer Empfangsleistung eines von dem Gegenstand ausgesendeten Signals wird als Ort des Gegenstands eine aus mehreren vorbestimmten Zonen, die im Bereich des Kraftfahrzeugs definiert sind, zugeordnet. Dies benötigt aber eine Mehrantennenanordnung.

Aus der DE 10 2013 006 927 A1 ist bekannt, dass mittels eines RFID-TAG (RFID - Radio Frequency Identification) eine Authentifizierungsinformation ausgesendet werden kann. Die Authentifizierungsinformation wird dazu genutzt, ein WLAN-Netzwerk (WLAN - Wireless Local Area Network) oder eine Bluetooth-Verbindung freizuschalten. Ein RFID-TAG ist ohne eigenen Energiespeicher und somit nicht in der Lage, von sich aus eine Funkkommunikation zu starten. Im Falle eines Diebstahls könnte er sich somit nicht aktiv melden.

Aus der US 2012/0025973 A1 ist bekannt, dass mittels eines TAGs ("tracking tag") Objekte oder Personen lokalisiert werden können.

Aus der US 2014/0035732 A1 ist bekannt, dass ein Aufenthaltsort einer Sendeeinheit anhand von Informationen zu einem Eintreffen von durch die Sendeeinheit ausgesendeten Signalen bei Empfangseinheiten festgestellt werden kann.

Aus der US 2014/0228059 A1 ist bekannt, dass mittels eines Systems aus ortsfesten und mobilen TAGs der Aufenthaltsort einer Person oder eines Objektes ermittelt werden kann.

Die Veröffentlichungsschrift WO 2013/163334 A2 zeigt einen Flugzeugmodus für drahtlose Sendegeräte und ein System zum Senden von Informationen über kurze Entfernungen. Gepäckstücke können mit Transmittern versehen sein, welche periodisch und drahtlos Informationen aussenden. Bei einem Empfang einer solchen Information kann das Gepäckstück besser lokalisiert werden. Die Sendegeräte können auch anderen Gegenständen oder auch Kindern zugeordnet werden. Wird die Information nicht empfangen, so kann auf einen Verlust des Gepäcksstücks geschlossen werden.

Der Erfindung liegt die Aufgabe zugrunde, einen TAG oder eine Markiereinheit bereitzustellen, dessen Energieverbrauch zum Signalisieren seines Aufenthaltsorts gering ist.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren bereitgestellt, um eine Markiereinheit mittels mehrerer Basiseinheiten zu lokalisieren oder zu orten. Eine andere Bezeichnung für eine solche Markiereinheit ist auch TAG. Als Basiseinheit kann beispielsweise jeweils ein Kraftfahrzeug oder ein mobiles Endgerät (zum Beispiel ein Smartphone oder ein Tablet-PC oder eine Smartwatch) oder eine Empfangsstation beispielsweise für die Installation in einem Gebäude vorgesehen sein. Die Markiereinheit ermittelt ihren Aufenthaltsort relativ, nämlich in Bezug auf jeweils eine Basiseinheit. Mit anderen Worten ermittelt die Markiereinheit, ob sie sich im Empfangsbereich einer Basiseinheit befindet, d.h. ob sich in ihrem Sendebereich eine Basiseinheit befindet. Die Ortsangabe des Aufenthaltsorts kann beispielsweise sein: "Transport im Kraftfahrzeug" oder "beim Smartphone" oder "im Büro". Die Markiereinheit sendet hierzu während zumindest eines vorbestimmten Sendezeitpunkts ein Sendetelegramm aus. Eine andere Bezeichnung für Sendetelegramm ist auch Sendenachricht. Des Weiteren betreibt die Markiereinheit eine Empfangseinrichtung, um ein Antworttelegramm aus einer der mehreren Basiseinheiten als Antwort auf das jeweilige Sendetelegramm zu empfangen. Eine andere Bezeichnung für Antworttelegramm ist auch Antwortnachricht. Die Markiereinheit prüft also, ob sie erfolgreich mit einer Basiseinheit kommunizieren kann (Austausch von Sendetelegramm und Antworttelegramm). Sodann ist sowohl der Markiereinheit als auch der jeweiligen Basiseinheit bekannt, wo sich die Markiereinheit befindet.

Nun erfordert aber das Aussenden eines Sendetelegramms und das Betreiben einer Empfangseinrichtung in der Markiereinheit Energie, die ja bei der Erfindung gespart werden soll. Dies wird erfindungsgemäß erreicht, indem in einem Synchronmodus die Markiereinheit jeweils ein Sendetelegramm nur zu einem ganz bestimmten Sendezeitpunkt oder zu ganz bestimmten Sendezeitpunkten aussendet, also insbesondere möglichst selten, bevorzugt nur bei einem Ortswechsel. Hierzu ermittelt die Markiereinheit geeignete Sendezeitpunkte. In dem Synchronmodus legt die Markiereinheit mittels eines vorbestimmten, der mehreren Basiseinheiten zugeordneten Sendeplans den zumindest einen Sendezeitpunkt fest.

Hierdurch ergibt sich der Vorteil, dass die Markiereinheit ihre Sendeeinheit und ihre Empfangseinheit nur zu vorbekannten, festgelegten Zeiten betreiben oder mit Energie versorgen muss. Durch den im Synchronmodus verwendeten Sendeplan ist ein zeitlich synchroner Verbindungsaufbau oder eine zeitlich synchrone Kommunikation (Austauschen von Sendetelegramm und Antworttelegramm) ermöglicht. Zwischen den Sendezeitpunkten können die Sendeeinheit und die Empfangseinheit deaktiviert oder ausgeschaltet bleiben. Die mehreren Basiseinheiten erwarten von der Markiereinheit dann ohnehin kein Sendetelegramm. Jede Basiseinheit kann somit anhand des Sendeplans die oben beschriebene zweideutige Situation auflösen, weil aus Sicht der mehreren Basiseinheiten nun anhand des Sendeplans zwischen dem Stromspar-Modus und einem Verlust der Markiereinheit unterschieden werden kann. Nur wenn zu dem zumindest einen Sendezeitpunkt gemäß Sendeplan ein jeweiliges Sendetelegramm ausbleibt oder nicht empfangen wird, muss in der jeweiligen Basiseinheit davon ausgegangen werden, dass die Markiereinheit verloren gegangen ist.

Erfindungsgemäß kann für jede Basiseinheit ein individueller Sendeplan genutzt werden. In dem Synchronmodus ermittelt die Markiereinheit hierzu mittels eines Bewegungssensors ihr aktuelles Bewegungsprofil. Die Markiereinrichtung erkennt also, in welchem Maß oder mit welchen Geschwindigkeitswerten und/oder Beschleunigungswerten sie aktuell bewegt und/oder beschleunigt wird. Der Bewegungssensor kann hierzu ein Beschleunigungssensor, das heißt beispielsweise ein sogenannter G-Sensor, sein. Das Bewegungsprofil beschreibt einen jeweiligen zeitlichen Verlauf eines Geschwindigkeitswerts und/oder Beschleunigungswerts. Das Bewegungsprofil kann dabei jeweils einen vorbestimmten Zeitraum abdecken, z.B. in einem Bereich von 10 s bis 10 min. In Abhängigkeit von dem ermittelten aktuellen Bewegungsprofil schätzt die Markiereinheit mittels eines Nutzungsmodells, welche der mehreren Basiseinheiten sich aktuell in Sendereichweite der Markiereinheit befinden müsste. Die Markiereinheit ermittelt also anhand ihres aktuellen Bewegungsprofils, ob sie sich in der Umgebung einer Basiseinheit befindet, in deren Umgebung sich für die Markiereinheit ein jeweiliges charakteristisches Bewegungsprofil ergibt. Beispielsweise ergibt sich während einer Fahrt in einem Kraftfahrzeug aufgrund von Vibrationen und/oder Erschütterungen des Kraftfahrzeugs ein für die Fahrt charakteristisches Bewegungsprofil. In einem Büro, wenn die Markiereinheit unbewegt zum Beispiel auf einem Tisch liegt, ergibt sich ein entsprechend anderes charakteristisches Bewegungsprofil. In Abhängigkeit von der geschätzten Basiseinheit, die sich gemäß dem aktuellen Bewegungsprofil in der Sendereichweite der Markiereinheit befinden müsste, legt die Markiereinheit mittels eines vorbestimmten, dieser geschätzten Basiseinheit zugeordneten Sendeplans den zumindest einen Sendezeitpunkt fest. In Abhängigkeit von der geschätzten Basiseinheit wählt die Markiereinheit den dazugehörigen Sendeplan aus. Die Markiereinheit geht also davon aus, dass sich die geschätzte Basiseinheit in Sendereichweite befindet und sendet das zumindest eine Sendetelegramm gemäß dem Sendeplan aus, also zu dem zumindest einen Sendezeitpunkt gemäß dem der geschätzten Basiseinheit zugeordneten Sendeplan. Für jede Basiseinheit kann dabei ein individueller Sendeplan vorgesehen sein. Die Markiereinheit passt also ihr Sendeverhalten an die geschätzte Basiseinheit an. Somit kann also die Anzahl und/oder die Häufigkeit oder Senderate von zu sendenden Sendetelegrammen an die Basiseinheit angepasst werden. Es kann z.B. hierdurch das Aussenden eines Sendetelegramms auf einen vorbestimmten Zeitraum nach einem Ortswechsel begrenzt werden. So braucht ein Sendetelegramm z.B. nur einmal zu Beginn einer Fahrt in der Basiseinheit "Kraftfahrzeug" ausgesendet werden.

Durch die Erfindung ergibt sich der Vorteil, dass die Markiereinheit immer nur dann zumindest ein Sendetelegramm aussendet, wenn sie anhand ihres Bewegungsprofils erkennt, dass sie sich überhaupt in der Nähe einer Basiseinheit befindet, die auf das Sendetelegramm antworten könnte. Entsprechend muss sie ihre Sendeeinrichtung zum Aussenden eines Sendetelegramms immer nur dann betreiben, wenn das Aussenden eines Sendetelegramms überhaupt nur Sinn macht, weil sich eine Basiseinheit in der Sendereichweite befinden kann. Das besagte Nutzungsmodell erzeugt hierzu zu dem ermittelten Bewegungsprofil eine Angabe einer geschätzten Basiseinheit.

Die Erfindung umfasst auch Ausführungsformen, durch die sich zusätzliche Vorteile ergeben.

Eine Ausführungsform sieht vor, dass die Markiereinheit in dem Synchronmodus die Empfangseinrichtung nur im Zusammenhang mit dem Aussenden des Sendetelegramms betreibt. Mit anderen Worten bleibt die Empfangseinrichtung deaktiviert oder ausgeschaltet und wird nur in einem vorbestimmten Zeitfenster aktiviert oder betrieben, wobei das Zeitfenster jeweils relativ zum Sendezeitpunkt des Sendetelegramms liegt. Beispielsweise kann also anschließend an das Aussenden des Sendetelegramms die Empfangseinrichtung für eine vorbestimmte Zeitdauer, beispielsweise in einem Bereich von 100 Millisekunden bis 2 Sekunden, betrieben werden. Hierdurch kann der Betrieb der Empfangseinrichtung auf solche Zeitfenster oder Zeitintervalle begrenzt werden, in denen überhaupt nur die Möglichkeit besteht, erfolgreich Antworttelegramm als Antwort auf ein gesendetes Sendetelegramm zu empfangen. Somit wird der Energiebedarf oder der Energieverbrauch der Markiereinheit reduziert.

Eine Ausführungsform sieht vor, dass für den Fall, dass ein Sendetelegramm oder eine vorbestimmte Anzahl von aufeinanderfolgenden Sendetelegrammen unbeantwortet bleibt, die Markiereinheit von dem Synchronmodus in einen Suchmodus umschaltet. Erhält die Markiereinheit also auf ein Sendetelegramm hin oder auch auf mehrere aufeinanderfolgend ausgesendete Sendetelegramme hin kein jeweiliges Antworttelegramm, so kommt also keine erfolgreiche Kommunikation mit einer Basiseinheit zustande und es wird in den Suchmodus umgeschaltet. In den Suchmodus kann auch zusätzlich oder alternativ dazu auch für denjenigen Fall umgeschaltet werden, dass durch das Nutzungsmodell signalisiert wird, dass das aktuelle Bewegungsprofil nicht zuordenbar ist. Mit anderen Worten ist es aktuell unmöglich, mittels des Nutzungsmodells einen Rückschluss von dem aktuellen Bewegungsprofil auf eine Empfangseinheit zu ziehen. Mit anderen Worten wird die Markiereinheit mit einem Bewegungsprofil bewegt, das zu einer keiner Basiseinheit passt. Damit weicht das Bewegungsprofil also von allen bekannten Bewegungsprofilen ab. Auch dies kann ein Hinweis darauf sein, dass sich die Markiereinheit nicht in der vorgesehenen oder gewohnten Umgebung befindet.

Die Markiereinheit schaltet also in diesen beiden Fällen (kein Antworttelegramm und/oder ein unbekanntes Bewegungsprofil) von dem Synchronmodus in den Suchmodus, in welchem die Markiereinheit Sendetelegramme mit einer im Vergleich zum Synchronmodus höheren Senderate oder Sendehäufigkeit pro Zeiteinheit aussendet. Mit anderen Worten werden pro Zeiteinheit mehr Sendetelegramme ausgesendet als im Synchronmodus. Hierdurch ergibt sich der Vorteil, dass die Wahrscheinlichkeit vergrößert wird, dass eine andere als die erwartete oder geschätzte Basiseinheit eines der Sendetelegramme empfängt und mit einem Antworttelegramm antwortet. Zusätzlich oder alternativ zur erhöhten Senderate für Sendetelegramme kann vorgesehen sein, dass in dem Suchmodus die Markiereinheit die Empfangseinrichtung zusätzlich auch unabhängig von dem Aussenden der Sendetelegramme betreibt, um vorbestimmte Suchtelegramme zu empfangen. Eine andere Bezeichnung für Suchtelegramm ist auch Suchnachricht. Ein Suchtelegramm kann von einer Basiseinheit unabhängig von einem zuvor empfangenen Sendetelegramm ausgesendet werden, um eine Markiereinheit aufzufordern, sich z.B. mit einem Sendetelegramm zu melden. Im Suchmodus schaltet die Markiereinheit also in einen Lauschbetrieb. Mit anderen Worten können auch solche Suchtelegramme empfangen werden, die ohne ein vorheriges Sendetelegramm von einer Basiseinheit ausgesendet worden sein können, um von einer Basiseinheit aus einen Kommunikationskontakt oder eine Kommunikationsverbindung mit der Markiereinheit aufzubauen. Indem dieser Suchmodus nur für die beiden genannten Fälle aktiviert wird, bleibt der Energieverbrauch der Markiereinheit ansonsten minimiert, da er nur dann erhöht wird, wenn es einen Hinweis oder ein Indiz gibt, dass die Markiereinheit verloren gegangen ist oder gesucht wird.

Wenn dagegen der Fall eintritt, dass ein Sendetelegramm der Markiereinheit tatsächlich durch ein Antworttelegramm beantwortet wird, so sieht eine Ausführungsform vor, dass die Markiereinheit als tatsächliche aktuelle, in Sendereichweite befindliche Basiseinheit diejenige Basiseinheit einträgt oder speichert, deren Kennung in dem Antworttelegramm enthalten ist. Mit anderen Worten speichert die Markiereinheit eine in dem Antworttelegramm enthaltene Kennung der antwortenden Basiseinheit. Sodann nutzt die Markiereinheit einen Sendeplan für die tatsächlich in Sendereichweite befindliche Basiseinheit zum Ermitteln zumindest eines weiteren Sendezeitpunkts für ein jeweiliges Sendetelegramm. Mit anderen Worten verifiziert die Markiereinheit ihren aktuellen Aufenthaltsort, indem sie anhand der Kennung der antwortenden Basiseinheit im Antworttelegramm ermittelt, welche Basiseinheit sich tatsächlich in der Sendereichweite der Markiereinheit befindet. Die Markiereinheit speichert also den bestätigten Aufenthaltsort. Sodann stellt sie den zumindest einen Sendezeitpunkt für zumindest ein weiteres Sendetelegramm auf die tatsächlich in Sendereichweite befindliche Basiseinheit um oder ein.

Eine Ausführungsform sieht vor, dass für den Fall, dass sich hierbei die mittels des Nutzungsmodells geschätzte und die tatsächliche Basiseinheit unterscheiden, das Nutzungsmodell mittels eines vorbestimmten Lernalgorithmus angepasst wird. Mit anderen Worten wird bei einer Fehleinschätzung der Markiereinheit in Bezug auf die in Sendereichweite befindliche Basiseinheit das Nutzungsmodell angepasst. Hierdurch ergibt sich der Vorteil, dass die Markiereinheit sich an geänderte Nutzungsgewohnheiten eines Benutzers der Markiereinheit selbständig anpasst. Der Lernalgorithmus kann beispielsweise vorsehen, dass eine vorbestimmte Mindestanzahl an Fehleinschätzungen vorkommen muss, bevor das Nutzungsmodell angepasst wird. Der Lernalgorithmus kann auch vorsehen, dass zumindest ein Wert für eine statistische Beschreibung der Aufenthaltswahrscheinlichkeit der Markiereinheit angepasst wird.

Eine Ausführungsform sieht vor, dass als Nutzungsmodell ein Hidden-Markov-Modell betrieben wird. Hierdurch ergibt sich der Vorteil, dass keine exakte Übereinstimmung des aktuellen Bewegungsprofils mit dem Nutzungsmodell notwendig ist, sodass also auch eine statistische Variation des Bewegungsprofils, wie es sich bei einer Verwendung der Markiereinheit in derselben Umgebung in zwei unterschiedlichen Zeiträumen, beispielsweise an zwei unterschiedlichen Tagen, ergeben kann, dennoch zu einer Schätzung einer Basiseinheit führt. Ein Hidden-Markov-Modell kann auch mit einem aus dem Stand der Technik bekannten Lernalgorithmus angepasst werden, um eine Fehleinschätzung der Markiereinheit zu berücksichtigen. Aus einem Hidden-Markov-Modell lassen sich eine Übergangsmatrix und eine Beobachtungsmatrix erzeugen, die in der Markiereinheit als Nutzungsmodell gespeichert sein können.

Eine Ausführungsform sieht vor, dass jedes Sendetelegramm als Broadcast-Nachricht, das heißt als Nachricht für mehrere, unbestimmte Empfänger, ausgesendet wird. Hierdurch ergibt sich der Vorteil, dass für den Fall einer Fehleinschätzung betreffend die in der Sendereichweite befindliche Basiseinheit dennoch eine andere Basiseinheit die Broadcast-Nachricht empfangen und darauf reagieren z.B. mit einem Antworttelegramm kann.

Eine Ausführungsform sieht vor, dass zum Bilden des Nutzungsmodells die Markiereinheit in einem Lernmodus betrieben wird, in welchem die Markiereinheit Bewegungsprofile mittels des Bewegungssensors ermittelt und mittels der Empfangseinrichtung eine jeweilige Kennung der mehreren Basiseinheiten empfängt und in dem Nutzungsmodell dann eine Zuordnung jedes der Bewegungsprofile der Markiereinheit zu jeweils derjenigen Kennung vornimmt, zu der das Bewegungsprofil (38) jeweils gehört und/oder die während des Ermittelns des Bewegungsprofils empfangen wurde. Mit anderen Worten beobachtet die Markiereinrichtung, welche Kennung sieht empfängt, während sie ein jeweiliges Bewegungsprofil ausführt. Wird das Bewegungsprofil dann später noch einmal gemessen oder erkannt, so zeigt das Nutzungsmodell an, welche Kennung diesem Bewegungsprofil zugeordnet ist, das heißt welche Basiseinheit sich währenddessen zumindest im Lernmodus in Empfangsreichweite der Markiereinheit befand. Somit ist durch Mitführen der Markiereinheit im Lernmodus ein automatisierter Konfigurationsvorgang zum Einstellen oder Konfigurieren eines Nutzungsmodells ermöglicht. Anstelle oder zusätzlich zum Ermitteln der Bewegungsprofile mittels des Bewegungssensors der Markiereinheit selbst kann vorgesehen sein, dass mittels eines Bewegungssensors eines mobilen Endgeräts die Bewegungsprofile der mehreren Basiseinheiten ermittelt werden und für das Bilden des Nutzungsmodells verwendet werden. Hierdurch muss die Markiereinheit weniger oder keine Energie im Lernmodus verbrauchen. Das Anlernen des Nutzungsmodells kann außerhalb der Markiereinheit erfolgen. Es kann ein Default-Nutzerprofil (Standard-Nutzerprofil) vorgesehen sein, von dem aus mittels des besagten Lernalgorithmus ausgegangen werden kann. Somit kann bei der Markiereinheit mit geringerer Anlernzeit der Synchronmodus genutzt oder aktiviert werden. Das Default-Nutzerprofil kann von einem Benutzer aus mehreren auswählbar sein. Hiermit kann der Benutzer seine Nutzungsgewohnheit mitteilen.

Eine Ausführungsform sieht vor, dass das Nutzungsmodell aus mehreren Nutzungsmodellen in Abhängigkeit von einem aktuellen Datum und/oder einer aktuellen Uhrzeit und/oder in Abhängigkeit von einer Benutzereingabe ausgewählt wird. Mit anderen Worten können unterschiedliche Nutzungsmodelle für unterschiedliche Tage/ Tageszeiten/ Uhrzeiten/ Benutzereingaben vorgesehen oder genutzt werden. So kann z.B. ein Nutzungsmodell für Wochentage und ein Nutzungsmodell für Feiertage und/oder das Wochenende vorgesehen sein. Es kann ein Nutzungsmodell für unterschiedliche Tageszeiten vorgesehen sein (z.B. vormittags, mittags, abends, nachts). Ein Benutzer kann eine Abweichung vom regelmäßigen Gebrauch der Markiereinheit durch seine Benutzereingabe signalisieren oder angeben. Die Ausführungsform erlaubt also eine zeitgesteuerte Modellwahl und/oder eine benutzergesteuerte Korrektur der Modellwahl. Es kann ein Default-Nutzerprofil (Standard-Nutzerprofil) vorgesehen sein, das verwendet wird, wenn eine aktuelle Nutzungssituation der Markiereinheit unbekannt ist.

Um das erfindungsgemäße Verfahren durchzuführen, ist durch die Erfindung ein Markierelement oder eine Markiereinheit zum Markieren eines Objekts bereitgestellt. Die Erfindung stellt also einen sogenannten TAG bereit. Die Markiereinheit weist eine Sendeeinrichtung zum Senden von Sendetelegrammen und eine Empfangseinrichtung zum Empfangen von Antworttelegrammen und Suchtelegrammen auf. Des Weiteren weist die Markiereinheit einen Bewegungssensor auf, beispielsweise einen Beschleunigungssensor. Eine Steuereinrichtung der Markiereinheit ist dazu eingerichtet, eine Ausführungsform des erfindungsgemäßen Verfahrens durchzuführen. Die Steuereinrichtung kann hierzu zumindest einen Prozessor und/oder zumindest einen Mikrocontroller und/oder einen ASIC (Application Specific Integrated Circuit) aufweisen.

Bei der erfindungsgemäßen Markiereinheit ist insbesondere vorgesehen, dass bei dieser ein Empfänger für ein Positionssignal eines GNSS (Global Navigation Satellite System) fehlt. Ein Beispiel für einen solchen Empfänger ist ein GPS-Empfänger (GPS - Global Positioning System). Mit anderen Worten ist die Markiereinheit unfähig, ihre absolute Geoposition selbständig, das heißt unabhängig von einer Basiseinheit, zu ermitteln. Die Markiereinheit ist also ohne positionsbestimmendes Element ausgestattet. Hierdurch ist sie besonders energieverbrauchsarm.

Zu der Erfindung gehört auch ein System mit mehreren Basiseinheiten zum Kommunizieren mit einer Markiereinheit gemäß der Erfindung. Die Basiseinheiten weisen eine Kommunikationseinrichtung zum Empfangen zumindest eines Sendetelegramms aus der Markiereinheit und zum Aussenden eines Antworttelegramms auf. Das Antworttelegramm enthält dabei eine Kennung der jeweiligen Basiseinheit. Eine Steuereinrichtung der Basiseinheiten ist dazu eingerichtet zu überprüfen, ob das zumindest eine Sendetelegramm gemäß einem vorbestimmten Sendeplan eintrifft. Mit anderen Worten wird auch in den Basiseinheiten ein Sendeplan genutzt. Dieser muss mit dem Sendeplan der Markiereinheit übereinstimmen. Falls ein gemäß dem Sendeplan erwartetes Sendetelegramm oder eine vorbestimmte Anzahl von gemäß dem Sendeplan erwarteten aufeinanderfolgenden Sendetelegrammen ausbleibt, so ist die Steuereinrichtung für diesen Fall dazu eingerichtet, eine vorbestimmte Suchmaßnahme auszulösen. Wird also auf Seiten der Basiseinheiten kein Sendetelegramm empfangen, obwohl dieses gemäß dem Sendeplan erwartet wird, so wird die Markiereinheit als verloren oder vermisst eingestuft, das heißt es wird als Reaktion die Suchmaßnahme ausgelöst. Die jeweilige Basiseinheit und die Markiereinheit haben also den gleichen Sendeplan und somit ist der jeweiligen Basiseinheit bekannt, wann die Markiereinheit ein Sendetelegramm senden müsste, wenn die Markiereinheit sich plangemäß an der jeweiligen Basiseinheit befindet.

Eine Ausführungsform sieht vor, dass die besagte Suchmaßnahme umfasst, dass die mehreren Basiseinheiten zumindest einer vorbestimmten anderen Basiseinheit und/oder zumindest einer vorbestimmten als eine technische Sendeeinrichtung oder Kommunikationseinrichtung ausgebildeten Fremdeinheit signalisieren, in ihrem jeweiligen Sendebereich ein Suchtelegramm an die Markiereinheit auszusenden. Empfängt also die jeweilige Basiseinheit kein Sendetelegramm, obwohl sie dies gemäß Sendeplan erwartet, so kann sie zumindest eine andere Basiseinheit dazu bringen, ein Suchtelegramm an die Markiereinheit auszusenden, damit sich die Markiereinheit in Antwort auf das Suchtelegramm bei dieser anderen Basiseinheit meldet. Ein Suchtelegramm stellt also eine Aufforderung an die Markiereinheit dar, ein Sendetelegramm auszusenden. Befindet sich die Markiereinheit im Suchmodus (was sie aufgrund der gescheiterten Kommunikation mit der Basiseinheit tun wird), so ist die Empfangseinrichtung der Markiereinheit aktiv und kann das Suchtelegramm empfangen. Es kann zusätzlich oder alternativ zu einer Basiseinheit auch eine vorbestimmte Fremdeinheit dazu aufgefordert werden, ein Suchtelegramm auszusenden. Eine Fremdeinheit ist eine technische Sendeeinrichtung oder Kommunikationseinrichtung, die nicht zwingend die Merkmale einer Basiseinheit aufweisen muss, also nicht dazu ausgestaltet sein muss, Sendetelegramme mit einem Sendeplan abzugleichen. Die Suchmaßnahme kann also beispielsweise vorsehen, dass in mehreren Fremdfahrzeugen jeweils ein Suchtelegramm ausgesendet wird, um zu ermitteln, ob sich die Markiereinheit in dem jeweiligen Fremdfahrzeug oder in dessen Umgebung befindet. Das Signalisieren kann beispielsweise mittels eines Internetservers erfolgen, der von der jeweiligen Basiseinheit dazu angestoßen wird, die zumindest eine andere Basiseinheit und/oder die zumindest eine vorbestimmte Fremdeinheit dazu zu bringen, ein Suchtelegramm an die Markiereinheit auszusenden.

Gemäß einer Ausführungsform ist die Steuereinrichtung der Basiseinheiten dazu eingerichtet, für den Fall, dass ein Sendetelegramm von der Markiereinheit eintrifft, an zumindest einem vorbestimmten Empfänger zu signalisieren, dass sich die Markiereinheit bei der jeweiligen Basiseinheit befindet. Die Basiseinheiten können hierzu ihre Kennung und/oder ihre aktuelle Geoposition mitteilen. So können beispielsweise Basiseinheiten untereinander den zuletzt bestätigten Aufenthaltsort der Markiereinheit austauschen. Der aktuell oder zuletzt erkannte Aufenthaltsort der Markiereinheit, das heißt die zugehörige Basiseinheit und/oder deren Geoposition, kann beispielsweise an einen Benutzer signalisiert oder ausgegeben werden, beispielsweise mittels einer Anzeigeeinrichtung. Der Benutzer erkennt dann, wo die Markiereinheit zuletzt lokalisiert wurde.

Zu der Erfindung gehört schließlich auch ein System mit mehreren Basiseinheiten gemäß der Erfindung und mit zumindest einer Markiereinheit gemäß der Erfindung. Mittels des erfindungsgemäßen Systems lässt sich die zumindest eine Markiereinheit energiesparend betreiben und dennoch zuverlässig ein Verlust oder ein Diebstahl des Objekts, das mit der Markiereinheit ausgestattet oder markiert ist, detektieren.

Im Folgenden ist ein Ausführungsbeispiel der Erfindung beschrieben. Hierzu zeigt:
- Fig. 1: eine schematische Darstellung einer Ausführungsform des erfindungsgemäßen Systems;
- Fig. 2: eine schematische Darstellung einer Markiereinheit des Systems von Fig. 1;
- Fig. 3: eine schematische Darstellung eines Nutzungsmodells der Markiereinheit von Fig. 2;
- Fig. 4: eine schematische Darstellung eines anderen, zeitabhängigen Nutzungsmodells der Markiereinheit von Fig. 2; und
- Fig. 5: ein Flussschaudiagramm eines Verfahrens, das durch die Markiereinheit ausgeführt werden kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

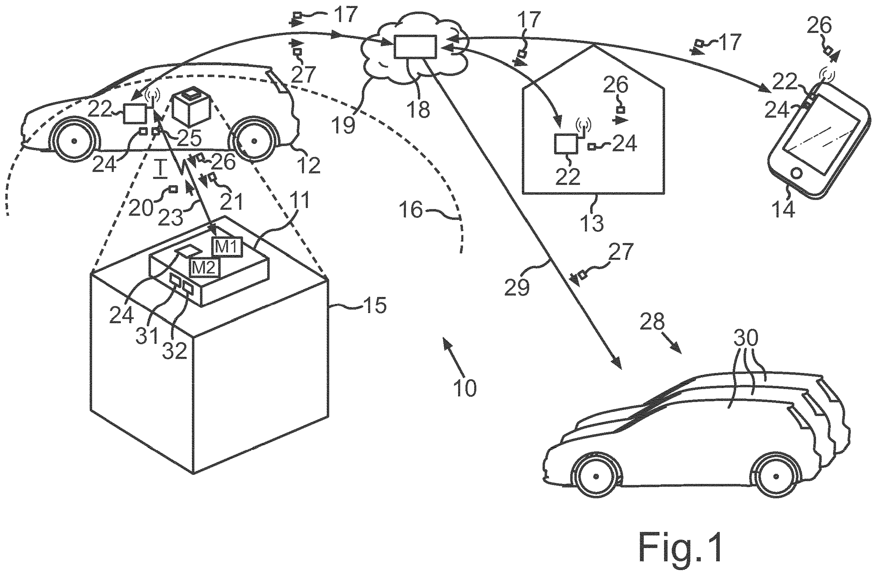

In Fig. 1 ist ein System 10 gezeigt, das eine Markiereinheit 11 und mehrere Basiseinheiten 12, 13, 14 aufweisen kann. Die Markiereinheit 11 kann an oder in einem Objekt 15 angeordnet oder befestigt sein. Beispielsweise kann es sich bei dem Objekt 15 um eine Bürotasche oder ein Schlüsselbund handeln. Die Markiereinheit 11 kann als ein elektronisches Gerät mit einer maximalen Abmessung von beispielsweise in einem Bereich von beispielsweise 0,5 Zentimeter bis 10 Zentimeter ausgestaltet sein. Die Markiereinheit 11 kann auch als ein Bestandteil des Objekts 15 ausgestaltet sein. Das Objekt 15 kann dann beispielsweise ein Kraftfahrzeug oder ein mobiles Endgerät, zum Beispiel ein Smartphone, sein. Im Folgenden sei angekommen, dass es sich bei dem Objekt 15 um ein portables Objekt, beispielsweise eine Bürotasche, handelt. Die Basiseinheit 12 kann beispielsweise ein Kraftfahrzeug sein. Die Basiseinheit 13 kann beispielsweise ein Gebäude, beispielsweise ein Wohnhaus oder ein Bürogebäude sein. Die Basiseinheit 14 kann beispielsweise ein mobiles Endgerät, zum Beispiel ein Smartphone, sein.

In Fig. 1 ist dargestellt, dass das Objekt 15 und mit ihm die Markiereinheit 11 aktuell in der Basiseinheit 12, also beispielsweise dem Kraftfahrzeug, mitgeführt oder transportiert wird.

Bei dem System 10 ist vorgesehen, dass die Markiereinheit 11 zu vorbestimmten Sendezeitpunkten T jeweils mit zumindest einer der Basiseinheiten 12, 13, 14 kommuniziert. Im Folgenden sei angenommen, dass es sich zu dem in Fig. 1 dargestellten Sendezeitpunkt T um die Basiseinheit 12 handelt, mit der kommuniziert werden sollte. Bei erfolgreicher Kommunikation ist dann in der Basiseinheit 12 bekannt, dass die Basiseinheit 12 aktuell in einem Sendebereich 16 der Markiereinheit 11 angeordnet ist. In der Basiseinheit 12 ist somit bekannt, dass sich die Markiereinheit 11 und mit ihm das Objekt 15 bei der Basiseinheit 12 befinden. Die Basiseinheit 12 kann damit den aktuellen Aufenthaltsort 17 der Markiereinheit 11 und damit des Objekts 15 beispielsweise an die übrigen Basiseinheiten 13, 14 signalisieren oder melden. Hierzu kann vorgesehen sein, dass der aktuelle Aufenthaltsort 17 beispielsweise an einen Server 18 des Internets 19 signalisiert wird, welcher dann die übrigen Basiseinheiten 13, 14 über den aktuellen Aufenthaltsort 17 der Markiereinheit 11 und damit des Objekts 15 informiert. Hierzu kann eine jeweilige Internetverbindung zwischen den Bedieneinheiten 12, 13, 14 einerseits und dem Server 18 andererseits vorgesehen sein.

Die besagte Kommunikation zwischen Markiereinheit 11 und der in deren Sendebereich 16 angeordneten Basiseinheit 12 kann vorsehen, dass die Markiereinheit 11 in einem Synchronmodus M1 zu dem jeweiligen Sendezeitpunkt T ein Sendetelegramm 20 beispielsweise als Broadcast-Nachricht aussendet. Wird das Sendetelegramm 20 von einer Basiseinheit 12, 13, 14 empfangen, so ist dieser Basiseinheit (hier der Basiseinheit 12) bekannt, dass sie sich in dem Sendebereich 16 der Markiereinheit 11 befindet. Die Basiseinheit 12, welche das Sendetelegramm 20 empfängt, kann der Markiereinheit 11 mit einem Antworttelegramm 21 antworten, sodass auch in der Markiereinheit 11 die Information vorliegt, welche Basiseinheit 12 sich aktuell in ihrem Sendebereich 16 befindet.

Für die Kommunikation mit der Markiereinheit 11 kann jede Basiseinheit 12, 13, 14 eine Kommunikationseinrichtung 22 aufweisen und/oder betreiben. Mittels der Kommunikationseinrichtung 22 kann eine Funkverbindung 23 mit der Markiereinheit 11 bereitgestellt werden. Die Kommunikationseinrichtung 22 kann beispielsweise auf der Grundlage des Standards Bluetooth oder WLAN (Wireless Local Area Network) ausgestaltet sein.

Zu welchen Sendezeitpunkten T die Markiereinheit 11 versucht, die Kommunikation mit einer Basiseinheit 12, 13, 14 durchzuführen, kann durch einen Sendeplan 24 festgelegt sein. Der Sendeplan 24 kann auch in jeder Basiseinheit 12, 13, 14 gespeichert oder bereitgestellt sein. Der Sendeplan 24 kann für jede Basiseinheit 12, 13, 14 des Systems 10 individuelle oder spezifische Sendezeitpunkte T vorsehen. Empfängt eine Basiseinheit 12 zu einem oder mehreren aufeinanderfolgenden, durch den Sendeplan 24 vorgegebenen Sendezeitpunkten T kein Sendetelegramm 20, so bedeutet dies, dass sich die Markiereinheit 11 und damit das Objekt 15 nicht wie gemäß dem Sendeplan 24 geplant im Bereich oder bei der Basiseinheit 12 befindet. Somit ist dann in der Basiseinheit 12 bekannt, dass die Markiereinheit 11 und mit ihm das Objekt 15 fehlen oder außerplanmäßig abwesend sind. Die Basiseinheit 12 kann daraufhin eine vorbestimmte Suchmaßnahme 25 auslösen oder durchführen.

Die Suchmaßnahme 25 kann umfassen, dass die Basiseinheit 12 selbst mittels ihrer Kommunikationseinrichtung 22 ein Suchtelegramm 26 aussenden, welches von einer Markiereinheit 11 außerplanmäßig empfangen werden kann. Die Markiereinheit 11 kann dann auf das Suchtelegramm 26 antworten. Die Suchmaßnahme 25 kann auch umfassen, dass die Basiseinheit 12 an die übrigen Basiseinheiten 13, 14 eine Suchanfrage 27 aussendet, durch welche die übrigen Basiseinheiten 13, 14 aufgefordert werden, ihrerseits ein Suchtelegramm 26 mittels ihrer Kommunikationseinrichtung 22 auszusenden. Hierdurch kann ein Objekt 15 mittels der Markiereinheit 11 gefunden werden, das bei einer der anderen Basiseinheiten 13, 14 vergessen oder liegengelassen wurde. Zusätzlich oder alternativ kann vorgesehen sein, dass die Suchmaßnahme 25 umfasst, dass eine Suchanfrage 27 auch an zumindest eine andere Fremdeinheit 28 ausgesendet wird. Dies kann beispielsweise mittels des Servers 18 über eine jeweilige Internetverbindung 29 durchgeführt werden. Bei den Fremdeinheiten 28 kann es sich beispielsweise jeweils um ein Fremdfahrzeug 30, also ein anderes Kraftfahrzeug, handeln. Die Fremdeinheiten 28 können dann ihrerseits jeweils wieder ein Suchtelegramm 26 mittels einer jeweiligen Kommunikationseinrichtung aussenden. Hierdurch kann das Objekt 15 mit der Markiereinheit 11 auch außerhalb eines Sendebereichs der Bedieneinheiten 12, 13, 14 gefunden werden.

Damit die Markiereinheit 11 auf ein Suchtelegramm 26 reagieren kann, muss sie empfangsbereit sein. Dazu muss sie den Synchronmodus M1 beenden. Die Markiereinheit 11 ihrerseits erkennt hierzu, wenn sie zu einer Basiseinheit 12 keine Kommunikation gemäß Sendeplan 24 zu einem Sendezeitpunkt T oder mehreren aufeinanderfolgenden Sendezeitpunkten T durchführen kann. Sie erhält dann nämlich auf ihr Sendetelegramm 20 hin kein Antworttelegramm 21. Die Markiereinheit 11 kann dann von dem Synchronmodus M1 auf einen Suchmodus M2 umschalten. Im Suchmodus M2 kann vorgesehen sein, dass die Markiereinheit 11 unabhängig vom Sendeplan 24 zu vorbestimmten Sendezeitpunkten ein Sendetelegramm 20 aussendet. Insbesondere kann die Sendehäufigkeit pro Zeiteinheit oder Senderate von Sendetelegrammen 20 im Suchmodus M2 größer als im Synchronmodus M1 sein. Zusätzlich oder alternativ dazu kann auch eine Empfangseinrichtung 32 der Markiereinheit 11 dauerhaft auf Empfang geschaltet sein, um die Suchtelegramme 26 einer Bedieneinheit 12, 13, 14 und/oder einer Fremdeinheit 28 zu empfangen.

Im Synchronmodus M1 muss somit die Markiereinheit 11 also eine Sendeeinrichtung 31 zum Senden der Sendetelegramme nur zu den gemäß Sendeplan 24 vorgesehenen Sendezeitpunkten T betreiben oder mit Energie versorgen. Genauso muss die Empfangseinrichtung 32 nur nach dem Aussenden des Sendetelegramms 20 für eine bestimmte Zeitdauer, beispielsweise in einem Bereich von 1 Sekunde bis 1 Minute, betreiben oder mit Energie versorgen, wenn nämlich bei planmäßiger Kommunikation ein Antworttelegramm 21 erwartet werden kann. Grund dafür ist die synchrone, durch den Zeitplan 24 synchronisierte Kommunikation.

Im Suchmodus M2 muss dagegen die Sendeeinrichtung 31 und/oder die Empfangseinrichtung 32 aufgrund der asynchronen Kommunikation dauerhaft oder öfter betrieben werden.

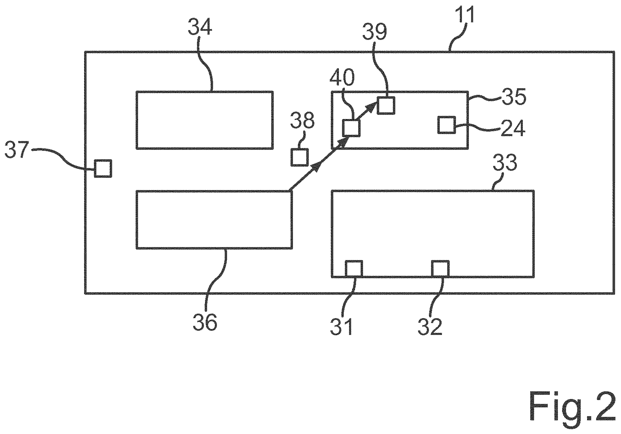

Fig. 2 veranschaulicht die Markiereinheit 11 noch einmal genauer. Die Markiereinheit 11 kann eine Funkschnittstelle 33 für die bidirektionale Kommunikation mittels der Sendeeinrichtung 31 und der Empfangseinrichtung 32 aufweisen. Die Funkschnittstelle 33 kann auf der Grundlage eines Standards wie zum Beispiel Bluetooth oder WLAN gebildet sein.

Zum Versorgen der Markiereinheit mit Energie kann ein Energiespeicher 34, beispielsweise eine Batterie, vorgesehen sein. Des Weiteren kann eine Steuereinrichtung 35 vorgesehen sein, dass die beispielsweise auf der Grundlage eines Mikrocontrollers gebildet sein kann. Durch die Steuereinrichtung 35 kann der Sendeplan 24 überwacht oder ausgewertet oder genutzt werden.

Wie bereits ausgeführt, sieht der Sendeplan 24 Sendezeitpunkte T vor, die individuell oder spezifisch auf die jeweilige Basiseinheit 12, 13, 14 abgestimmt oder angepasst sein können.

Für diese Ausführungsform muss in der Markiereinheit 11 aber kein ortsbestimmendes Element, wie beispielsweise ein Empfänger für ein Positionssignal eines GNSS (Global Navigation Satellite System), wie beispielsweise eines GPS (Global Positioning System) bereitgestellt sein. Vielmehr kann die Markiereinheit 11 individuell ermitteln oder schätzen, welche Basiseinheit 12, 13, 14 sich aktuell in der Nähe befinden müsste. Hierzu kann die Markiereinheit 11 einen Bewegungssensor 36 aufweisen. Mittels des Bewegungssensors 36 kann ein Bewegungsprofil 38 der Markiereinheit 11 ermittelt werden. Der Bewegungssensor 36 kann hierzu beispielsweise auf der Grundlage eines Beschleunigungssensors gebildet sein. Anhand von Rüttelbewegungen und/oder lateralen Beschleunigungen und/oder Vibrationen kann durch den Bewegungssensor 36 das Bewegungsprofil 38 erzeugt werden. Das Bewegungsprofil 38 unterscheidet sich beispielsweise bei einer Fahrt in einem Kraftfahrzeug von einer Positionierung des Markierungselements 11 auf einem Bürotisch oder in einer Jackentasche eines zu Fuß sparzierenden Benutzers.

Es kann auch eine Zeitgebereinheit 37, beispielsweise eine Uhr, vorgesehen sein. Mittels der Uhr 37 kann ein aktuelles Datum und/oder eine aktuelle Uhrzeit ermittelt werden.

Anhand des Bewegungsprofils 38 kann durch die Steuereinrichtung 35 erkannt oder geschätzt werden, welche Basiseinheit 12, 13, 14 sich aktuell im Sendebereich 16 der Markiereinheit 11 voraussichtlich befindet. Für die Zuordnung von Bewegungsprofil 38 zu einer Schätzung 39 der im Sendebereich 16 befindlichen Basiseinheit 12, 13, 14 kann in der Markiereinheit 11 ein Nutzungsmodell 40 vorgesehen sein. Das Nutzungsmodell 40 kann ein Nutzungsmuster oder ein Nutzerverhalten eines Nutzers der Markiereinheit 11 beschreiben.

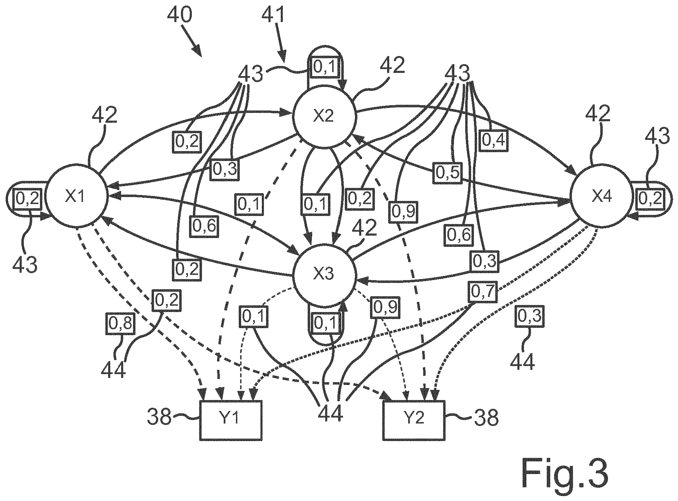

Fig. 3 veranschaulicht eine mögliche Ausführungsform des Nutzungsmodells 40. Als Nutzungsmodell 40 kann beispielsweise ein Hidden-Markov-Modell 41 (HMM) vorgesehen sein. Das HMM 41 kann Zustände 42 (sogenannte "Versteckte Zustände" - Hidden States) aufweisen, von denen jeder einen potentiellen oder möglichen Aufenthaltsort der Markiereinheit 11, das heißt eine sich in der Nähe befindende Basiseinheit 12, 13, 14, repräsentieren kann. Beispielsweise kann folgende Zuordnung von Zuständen 42 vorgesehen sein:
X1: zuhause
X2: unterwegs ohne Fahrzeug
X3: unterwegs mit Fahrzeug
X4: im Büro

Je nach Zustand 42 resultiert ein bestimmtes Bewegungsprofil 38, das mit dem Bewegungssensor 36 erfasst werden kann. Beispielsweise können in einem einfachen HMM 41 die folgenden Bewegungsprofile vorgesehen sein, die in entsprechenden Beobachtungen Y resultieren:
Y1: Markiereinheit 11 nicht bewegt
Y2: Markiereinheit 11 bewegt

Zwischen den Zuständen 42 kann in dem HMM 41 gemäß vorbestimmten Übergangswahrscheinlichkeiten 43 gewechselt werden, für in Fig. 3 die beispielhafte Werte angegeben sind. In jedem Zustand 42 ergibt sich für die beiden möglichen beobachtbaren Bewegungsprofile 38 eine jeweilige Beobachtungswahrscheinlichkeit 44 für eine jeweilige Beobachtung Y eines Bewegungsprofils 38, für in Fig. 3 die beispielhafte Werte angegeben sind. Auf Grundlage des Nutzungsmodells 40 und aufeinanderfolgend beobachteten Bewegungsprofilen 38 kann eine Abfolge von Zustandswechseln in dem Modell 40 ermittelt werden und daraufhin der aktuelle Zustand 42 und damit der Aufenthaltsort ermittelt werden. Hierzu sind aus dem Stand der Technik Algorithmen bekannt.

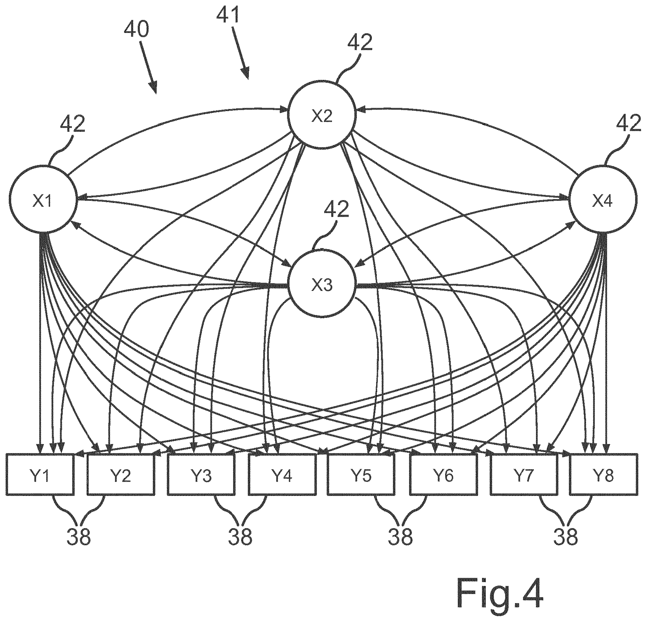

Fig. 4 veranschaulicht ein komplexeres Nutzungsmodell 40, dass ebenfalls auf einem HMM 41 beruhen kann. Das in Fig. 4 dargestellte Nutzungsmodell 40 kann eine zeitabhängige Beobachtungswahrscheinlichkeit für unterschiedliche Bewegungsprofile 38 vorsehen. So können folgende Beobachtungen vorgesehen sein:
Y1: Markiereinheit nicht bewegt, vormittags
Y2: Markiereinheit bewegt, vormittags
Y3: Markiereinheit nicht bewegt, mittags
Y4: Markiereinheit bewegt, mittags
Y5: Markiereinheit nicht bewegt, abends
Y6: Markiereinheit bewegt, abends
Y7: Markiereinheit nicht bewegt, nachts
Y8: Markiereinheit bewegt, nachts,
wobei die Tageszeiten vormittags, mittags, abends, nachts z.B. durch die Zeitgebereinheit 37 ermittelt werden können.

Das Nutzungsmodell 40 kann durch Beobachten von Bewegungsprofilen 38 mittels eines Lernalgorithmus für das Nutzungsprofil 40, beispielsweise eines Lernalgorithmus für ein HMM 41, in einer Lernphase gebildet werden.

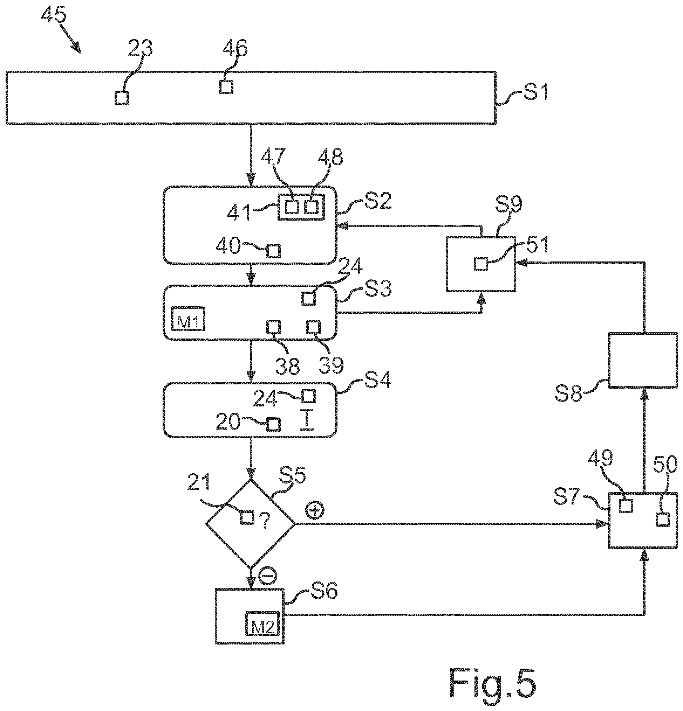

Fig. 5 veranschaulicht eine Ausführungsform eines Verfahrens 45, das durch die Markiereinheit 11 durchgeführt werden kann, um ein Nutzungsmodell 40 zu empfangen und dann sein Sendeverhalten gemäß dem Nutzungsmodell 40 und einem Sendeplan 24 anzupassen oder einzustellen.

In einem Schritt S1 kann die Markiereinheit 11 in einem Lernmodus 46 während der Benutzung des Objekts 15, beispielsweise über einen oder mehrere Tage hinweg, die Funkverbindung 23 zu der jeweils im Sendebereich 16 befindlichen Basiseinheit 12, 13, 14 aufbauen. In den Basiseinheiten 12, 13, 14 ist somit bekannt, zu welchen Zeitpunkten beispielsweise im Verlauf eines Tages sich die Markiereinheit 11 jeweils bei ihnen befindet.

In einem Schritt S2 kann daraus ein HMM 41 gebildet werden, das in Form von Übergangsmatrizen 47 und Beobachtungsmatrizen 48 an die Markiereinheit 11 übertragen werden kann. In der Markiereinheit 11 kann daraus dann das Nutzungsprofil 40 gebildet werden. In einem Schritt S3 kann dann der Sendeplan 24 festgelegt werden, der beispielsweise vorsehen kann, dass nach einem Zustandswechsel zu Beginn eines neuen Zustands 42 einmal ein Sendetelegramm 20 an die neue Basiseinheit 12, 13, 14, die sich dann im Sendebereich 16 befindet, ausgesendet werden soll. Es kann auch vorgesehen sein, zyklisch oder mehrmals während eines jeweiligen Zustands 42 ein Sendetelegramm auszusenden.

Es kann dann mittels des Bewegungssensors 36 im Synchronmodus M1 ein jeweils aktuelles Bewegungsprofil 38 ermittelt werden und daraus die im Sendebereich 16 befindliche Basiseinheit 12, 13, 14 geschätzt werden, also die geschätzte Basiseinheit 39 ermittelt werden.

Für die geschätzte Basiseinheit 39 kann in einem Schritt S4 gemäß dem Sendeplan 24 der zumindest eine Sendezeitpunkt T ermittelt werden und zu jedem Sendezeitpunkt T das Sendetelegramm 20 ausgesendet werden. In einem Schritt S5 kann überprüft werden, ob ein Antworttelegramm 21 auf ein Sendetelegramm 20 oder mehrere aufeinanderfolgende Sendetelegramme 20 jeweils empfangen wurde. Ist dies nicht der Fall (in Fig. 5 durch ein "-"-Zeichen symbolisiert), so kann in einem Schritt S6 in den Suchmodus M2 gewechselt werden. Wird im Schritt S5 ein Antworttelegramm 21 empfangen (in Fig. 5 durch ein "+"-Zeichen symbolisiert), so kann in einem Schritt S7 ein Zähler 49 für erfolgreiche Kommunikation inkrementiert werden. Falls der Schritt S6 ausgeführt wurde, kann im Schritt S7 ein Zähler 50 für erfolglose Kommunikation inkrementiert werden.

In einem Schritt S8 kann aus den Zählerständen der Zähler 49, 50 eine Erfolgswahrscheinlichkeit oder Aufenthaltswahrscheinlichkeit für den jeweiligen Zustand 42 neu ermittelt werden. In einem Schritt S9 kann mittels eines Lernalgorithmus 51 für das Nutzungsmodell 40 dieses adaptiert oder angepasst werden, um die Aufenthaltswahrscheinlichkeiten, die im Schritt S8 ermittelt wurden, zu berücksichtigen. Ein solcher Lernalgorithmus 51 kann beispielsweise für ein HMM 41 vorgesehen sein. Er ist an sich aus dem Stand der Technik bekannt. Durch den Schritt S9 kann die Markiereinheit 11 an eine sich ändernde Nutzungsgewohnheit eines Benutzers der Markiereinheit 11 angepasst werden.

Im Folgenden ist nochmal eine besonders bevorzugte Ausführungsform des erfindungsgemäßen Systems beschrieben. Die Markiereinheit 11 ist im Folgenden als TAG bezeichnet, um diese Ausführungsform gesondert zu bezeichnen.

Das bevorzugte Verfahren benutzt während der Ortung immer eine konstante Sendeleistung, diese wird dem Bereich einer Basiseinheit, also z.B. Kraftfahrzeug, Haus entsprechend minimiert. Ein TAG, der lange keine Verbindung mehr zum Kraftfahrzeug oder Haus hat, sendet mit maximaler Energie und hat somit einen Bereich von ca. 100 m. Im Haus oder Kraftfahrzeug wird die Reichweite, d.h. der Radius des Sendebereichs 16, durch die Sendeleistungsreduktion auf 10m reduziert.

Eine Ortung der TAGs erfolgt bevorzugt nicht mit einer zusätzlichen Anzahl von Sende oder Empfangsantennen.

Das Übermitteln oder Berechnen eines Sendeplans an den TAG legt die Anzahl und Häufigkeit der Sendetelegramme des TAGs fest.

Ein Beschleunigungssensor (Accelerometer, Akzelerometer, B-Messer oder G-Sensor) kann zusätzlich den Sendeplan auf neue Ereignisse triggern. Ein Beispiel ist, wenn ein für eine bestimmte Uhrzeit unerwartetes Bewegungsprofil erkannt wird.

Durch die Auswahl der Sendebereiche nach detektierten Aufenthaltsorten kann die Sendeleistung reduziert werden
Durch die Einbeziehung der Aufenthaltsorte und Bewegungsprofile vom Mastergeräten wie Kraftfahrzeug oder auch mobiles Endgerät, kann die Sendeleistung des TAGs angepasst werden.

Durch die Bewegungsanalyse und durch den Sendeplan werden die wahrscheinlich richtigen Aufenthaltsorte vorhergesagt.

Nur wenn sich ein TAG außerhalb einer bestimmten Zeitanforderung und Bewegungsprofils nicht mehr an den wahrscheinlichen Orten befindet, kann eine Suchanfrage erteilt werden. Das TAG schaltet dann in den Suchmodus und kann somit gefunden werden.

Ein Austausch der wahrscheinlichen Orte wird über das Auto oder ein mobiles Endgerät durchgeführt.

Aus einem Hidden-Markov-Graphen oder Hidden-Markov-Modell lassen sich alle Übergangsmatrizen und eine Beobachtungsmatrix ableiten. Im Prinzip werden alle wahrscheinlichen Orte als der normale Aufenthaltsort einbezogen. Nur wenn sich ein TAG diesen Vorgaben entzieht, ist eine Ortung über eine Suchanfrage über die Infrastruktur des Systems, d.h. z.B. das Kraftfahrzeug, möglich.

Befindet sich ein TAG an den wahrscheinlichen Aufenthaltsorten, ist eine Meldung durch den TAG nach der Sendeplan zu bevorzugen. Da Kraftfahrzeug / mobiles Endgerät somit in Bezug auf den Sendeplan synchronisiert wird, ist eine Ortung in den wahrscheinlichen Orten des TAGs möglich.

TAG, mobiles Endgerät, Kraftfahrzeug senden immer Broadcast-Nachrichten (Broadcast-Messages).
1. Ein Sendetelegramm muss im Synchronmodus eine zeitliche Synchronität besitzen zum Empfänger, somit wird auch der Suchaspekt eines TAGS zur Umgebung sichergestellt. Hierzu sind alle Teilnehmer (TAG und Basiseinheiten) mit dem gleich berechneten Sendeplan ausgestattet.
2. Zeitliche Synchronität des Verbindungsaufbaus zu einem oder mehreren Empfänger wird mit den Bewegungszeitpunkten der Empfänger abgeglichen.
3. Die Erkennung der Bewegung von TAG, mobiles Endgerät, Kraftfahrzeug, wird zum Abgleich der Position des Aufenthaltsort des TAGs benutzt.
4. Die erkannten Aufenthaltsorte werden mittels geeigneter statistischer Mittel, z.B. Hidden-Markov-Modell, mit den wahrscheinlichsten Aufenthaltsorten verglichen. Die Erfolgswahrscheinlichkeit wird in der Sendeplan zur Verfügung gestellt. Hieraus wird der nächste Zeitpunkt eines Sende/Antworttelegramms errechnet.
5. Das Nutzungsmodel kann vorab gewählt werden, um die Übergangswahrscheinlichkeiten und damit die Sendeplan anzupassen. Zusätzlich wird eine Lernalgorithmik zur Anpassung der Wahrscheinlichkeiten implementiert, um das Nutzungsverhalten des TAGs zu erkennen oder zu aktualisieren.
6. Zuordnungen des Aufenthaltsortes werden ausschließlich über die positionsbestimmenden Elemente des Kraftfahrzeugs oder mobiles Endgeräts durchgeführt. Somit besteht nicht die Notwendigkeit eines Positionsbestimmenden Elements in den TAG einzubauen. Es muss lediglich verifiziert werden, dass sich der TAG bei welcher Basiseinheit sich der TAG aktuell befindet.
7. Auf eine Ortungsfunktion mit Hilfe einer RSSI-Messung (RSSI - Received Signal Strength Indication) und triangolatorischen Messungen kann verzichtet werden.
8. Da die vermutlich erreichten Modellzustände Xn (n ein natürliche Zahl, siehe z.B. Fig. 3 und Fig. 4: X1, ...., X4) vom System beim erfolgreichen Absetzten eines Sendetelegramms dem System bekannt gemacht werden, wird die Trefferwahrscheinlichkeit erhöht.
9. Da dem Kraftfahrzeug, TAG und mobiles Endgerät die wahrscheinlichsten Orte bekannt gemacht werden, sind Meldungen des Systems im Kraftfahrzeug / mobiles Endgerät nicht unnötig häufig, sondern können gezielt explizit in vorbestimmbaren Zeiträumen erfolgen.

Ein Beispiel hierzu: Wird ein TAG mit einem Kraftfahrzeug im Kofferraum transportiert, dann werden Kraftfahrzeug und/oder mobiles Endgerät, die zeitgleichen Beschleunigungswerte messen. Somit kann z.B. in einem mobilen Endgerät ein Nutzungsmodell für den TAG berechnet werden. Mit Austausch des Sendeplans mit dem TAG wird auch die Art und Weise der Beschleunigungsprofile ausgetauscht. Obwohl die Sendereichweite des TAGs kaum größer ist als die Größe des Kraftfahrzeugs, z.B. 50 m, wird der TAG auch noch nach Kilometern im Kraftfahrzeug erreicht. Der Sendeplan wird mit Einträgen versorgt, die den Nutzerfall "Transport im Kraftfahrzeug " beinhaltet.

Wird ein TAG vom Kraftfahrzeug in das Haus mitgenommen, so wird das Kraftfahrzeug den TAG nicht mehr in der geforderten Zeit in dem Sendeplan erreichen. Das mobile Endgerät erkennt den TAG jedoch nach Ablage im Haus. Die Synchronität der Ereignisse, Orte wird wieder angepasst und beim nächsten Synchronitätsaustausch allen mitgeteilt. Also hier dem mobiles Endgerät, Kraftfahrzeug und TAG.

Die Ereignisse und Bewegungserkennung führen dann mittels des Lernalgorithmus zum Füllen eines Sendeplans die dem TAG Sendezeitpunkt, Bewegungsprofile mitteilt. Die Abspeicherung dieser Daten zeigt somit auch den aktuellen wahrscheinlichsten Ort an.

Wenn ein TAG stark von den Angaben in der Sendeplan abweicht und nach einem abgesetzten Sendetelegramm des TAGs keine Antworten in der Zeiteinheit der Sendeplan vom Kraftfahrzeug oder mobiles Endgerät erhält, kann er als vermisst betrachtet werden.

Erst dann schaltet ein TAG in den Suchmodus um, da es seine Verbindung in der vorher gelernten Bewegungsprofilen zu den Ablageorten nicht mehr erkennt. Der letzte positive Austausch der Synchronisationstelegramm gibt dem Benutzer den letzten Aufenthaltsort des TAGs bekannt. Somit kann der Benutzer an dem letzten Aufenthaltsort suchen oder weiß er einen vermutlich letzten Ablageort.

Kann der TAG keine Verbindung mehr zum Kraftfahrzeug oder mobiles Endgerät dauerhaft aufbauen, ist der TAG bzw. das damit markierte Objekt verloren oder vermisst. Alle Kraftfahrzeuge können somit ein Suchtelegramm vom TAG durch eine einheitliche unverwechselbare Kennung oder ID erkennen.

Das mit dem TAG selbst angelernte mobile Endgerät initiiert die Suchanfrage an den Server, der wiederum alle Kraftfahrzeuge verständigt, die ID zu suchen.

Weiterhin gibt es mobile Endgeräte mit einer APP (Application, Anwendungsprogramm), die durch das Drehen des SmartDevices die Richtung des TAG erkennen. Eine Suche flächendeckend nur mit mobilen Endgeräten wird zwar angeboten, hat aber das Problem, dass die Verbreitung dieser APP nicht auf allen mobiles Endgeräts zur Verfügung steht. Benutzer von mobilen Endgeräten installieren die zusätzliche APPs nicht auf ihrem Device oder schalten aus Ruhestromgründen Bluetooth, WLAN zu meist ab.

Keine neuen Antennen müssen im Kraftfahrzeug verbaut. Die Kommunikationseinrichtung der Infrastruktur der Kraftfahrzeuge übernimmt die Suche der verloren TAGs. Die Suchanfragen sind bevorzugt anonym aufgebaut und haben keine große Grundlast, da der Verbindungsaufbau der Anfragen im kleineren Traffic der Kommunikation liegt.

Somit kann ein Suchvorgang wie folgt vorsehen sein:
1. Anmeldung einer Suchanfrage über ein mobiles Endgerät und Server.
2. Triggerung eines Diebstahlvorgangs und daraufhin Aktivierung eines TAGs zum Senden an andere Kraftfahrzeug im Umfeld von z.B. ca. 100 m oder allgemein in einem Bereich von 10m bis 10km
3. Übertragung der GPS-Koordinaten vom mobiles Endgerät oder Kraftfahrzeug an einen Server zum sicheren Wiederfinden von Gegenständen/Objekten bzw. TAGs.

Das Verfahren zum Bestimmten der Sendezeitpunkte T ist bevorzugt wie folgt ausgestaltet.

### 1. Algorithmus

Die Fig. 3 zeigt beispielhaft einen abgeleiteten HMM-Graphen aus der Sicht eines TAGs. Das TAG weiß nur die Zeit und ob es bewegt wird. Die Übergangswahrscheinlichkeiten der Hidden-State-Wechsel werden durch den Lernalgorithmus dem Nutzerverhalten angepasst. Die Berechnung wird auf dem TAG durchgeführt mit dem Ziel den Sendeplan zu erstellen.

Zusätzlich sind die Informationen, zu welchen Zeiten der TAG sich laut Nutzungsverhalten bewegen und aufhalten müsste, abgespeichert. Durch eine Benutzeroberfläche auf einem Anzeigegerät (z.B. mobiles Endgerät) kann das Nutzungsverhalten vorab gewählt werden. Hierbei können Pseudonyme wie "Angestellter", "Vielreisender" oder "Urlauber" z.B. benutzt werden, um die Standardwerte der Übergangswahrscheinlichkeiten und Beobachtungswahrscheinlichkeiten beim Start des Systems im TAG vorzugeben. Der Nutzer hat die Möglichkeiten, Zeiträume seiner Nutzung und die Art der Nutzung zu parametrieren. Es ist also möglich, mehrere Nutzungsmodelle im TAG abzuspeichern. Aus der Beobachtung Y wird dann ein Sendetelegramm zu den Empfängern Kraftfahrzeug oder mobiles Endgerät abgeleitet. Weiterhin geben die Nutzungsmodelle die Zeiteinheit für den ganzen Tag oder für einen Zeitraum Mo.-Fr. wieder.

Dieses zeitbasierte Nutzungsmodell ist in Fig. 4 gezeigt. Hier wurde zur Übersichtlichkeit der Darstellung auf die Übergangswahrscheinlichkeiten verzichtet. Wie man sieht, wird es bereits bei vier Hidden-States Xn und acht Emissionen oder Beobachtungen Yn (2 Bewegungszustände bei 4 Tageszeiten) bereits komplex. Aus so einem Graphen lassen sich alle Übergangsmatrizen und eine Beobachtungsmatrix ableiten.

Ob ein Gegenstand vergessen, verloren oder gestohlen wurde, lässt sich durch dieses Nutzungsmodell nicht herausfinden. Allerdings kann so das Nutzungsverhalten dargestellt werden. Die Fälle *gestohlen, verloren, vergessen* können beispielsweise wie folgt ermittelt werden:
1. ein TAG wird zu einem Zeitpunkt bewegt, wo er laut Nutzungsverhalten nicht oder unter einer vorbestimmten Grenzwahrscheinlichkeit bewegt wird (z.B. nachts) und hat keinen Kontakt zum Kraftfahrzeug oder Smartphone oder einer anderen Basiseinheit.
   ->Daraus folgt, er wurde vermutlich gestohlen.
2. der TAG befindet sich nicht in der Nähe des Kraftfahrzeugs und/oder Smartphones oder einer anderen Basiseinheit, obwohl dies laut Nutzungsverhalten sehr wahrscheinlich wäre:
   - >der Tag wurde vergessen, wenn man zuvor im Büro oder zu Hause war oder
   - > der Tag wurde verloren, wenn man zuvor an unbestimmten Orten unterwegs war

Das wird solange durchgeführt bis entweder ein Antworttelegramm empfangen wird oder der der nächste Xn+1 Zustand erreicht wird. Die Sendeleistung kann zusätzlich erhöht werden, wenn lange Zeit keine Verbindung mehr zum mobilen Endgerät oder Kraftfahrzeug bestand.

### 2. Auswertung und Sendeplan

Wird ein Antworttelegramm als Suchanfrage von mehreren Kraftfahrzeug vom TAG erkannt, wird der Modus des TAGS auf Synchrones abhören M2 gesetzt. Da dem mobiles Endgerät und dem Kraftfahrzeug dieser Synchronmodus M2 mit einer zeitlichen Abfolge bekannt ist, muss der TAG nicht dauerhaft die Funkstrecke abhören und kann somit weiterhin Energie einsparen.

Ein TAG kann somit mit einem Sendeplan seine voraussichtlichen Zeitpunkte zu ordnen. Ein gültiges Antworttelegramm vom mobiles Endgerät oder Kraftfahrzeug zum TAG teilt dem TAG seinen tatsächlichen Hidden-State Xn mit. Da der TAG keine positionsbestimmenden Elemente in der Hardware besitzt, reichen die gültigen Sendetelegramme, die beim mobiles Endgerät oder Kraftfahrzeug ankommen sind, zur Positionsbestimmung aus. Die Aufenthaltsorte, an denen ein gültiges Sendetelegramm beim Kraftfahrzeug oder mobiles Endgerät angekommen ist, werden zur Anzeige im Kraftfahrzeug oder mobiles Endgerät benutzt. Somit kann der letzte Verweilort des TAGS immer sicher angegeben werden.

Wenn ein TAG den Beobachtungszustand Yn erreicht, werden folgende Modi des Sendeplans eingestellt.
a) Zeit synchrone Sendetelegramme absetzen gemäß Sendeplan
b) Warten auf Zeit synchrone Antworttelegramme vom mobilen Endgerät oder Fahrzeugen
c) Mehrfach Sendetelegramme absetzten
d) Stromsparmodus, wenn die Batterielebenszeit zu Ende geht

### 3. Telegrammarten

Allgemein sind die Telegramme immer mit dem Namen der Funktion, unverwechselbarer ID/Kennung des TAGs, der Art des Befehls und optional weiteren Attributen versehen.
<Name><ID_Number><Befehl><Attribute1>< Attribute2>...

### 3.1 TAG zu mobiles Endgerät oder Fahrzeug (allgemein Basiseinheit)

### 3.1.1 Sendetelegramme:

Sendetelegramme werden nach dem gemeinsamen Sendeplan abgesetzt. Jedem Teilnehmer, also mobiles Endgerät, Kraftfahrzeug, TAG muss diese Tabelle bekannt sein. Dieses Telegramm ist sehr kurz gehalten, um die Sendeleistung zu minimieren.
<Carloss><ID_TAGx><synchro><HiddenStateNumber>
wobei "Carloss" ein beispielhafter Protokollname ist, ID_TAGx die Kennung des TAGs, "synchro" die Kennung für ein Sendetelegramm und HiddenStateNumber der geschätzte Modellzustand Xn (geschätzte Basiseinheit 39).

Um die Sendeplan auszutauschen ist das folgende Telegramm vorhanden. Die Berechnung erfolgt auf dem TAG nach dem errechneten und gelernten HMModell, hierzu werden die Werte der Übergangsmatrizen und eine Beobachtungsmatrizen an den TAG übermittelt.

Das wird nur einmalig durchgeführt. Danach sendet das TAG immer durch seinen aktuellen Sendeplan.

Mobiles Endgerät und auch Kraftfahrzeug berechnen den gleichen Sendeplan nach den Übergangsmatrizen und der Beobachtungsmatrix für den TAG. Der Master der Berechnungen liegt im TAG, da TAGS unterschiedliches Nutzerverhalten haben können.
<Carloss><ID_TAGx><synchroTable><Matrizen>

### 3.1.2 Antworttelegramme

Das Antworttelegramm wird kurz gehalten, um die Sendeleistung gering zu halten.
<Carloss><ID_OwnerMobiles Endgerät | ID_OwnerFzg><synchro><HiddenStateNumber>
mit "ID_OwnerMobiles Endgerät | ID_OwnerFzg" der Kennung der Basiseinheit, "synchro" der Kennung als Antworttelegramm und "HiddenStateNumber" des tatsächlichen Modellzustands (d.h. der tatsächlichen Basiseinheit).

Das Nutzerverhalten wird durch das folgende Telegramm übermittelt.
<Carloss><ID_OwnerFzg><synchroTable><Matrizen>

### 3.2 Mobiles Endgerät oder Fahrzeug (allgemein Basiseinheit) zum TAG

### 3.2.1 Suchtelegramme

Diese Telegramme zeigen den aktuellen Suchstatus des TAGs vom mobiles Endgerät oder Kraftfahrzeug an
<Carloss><ID_OwnerMobiles Endgerät | ID_OwnerFzg ><synchro><HiddenStateNumber>

Zur Übertragung des Modells an die TAGs.
<Carloss><ID_OwnerFzg><synchroTable><Matrizen>

Das Telegramm wird gesendet, wenn ein TAG vom mobiles Endgerät oder Kraftfahrzeug vermisst wurde. Der TAG kann somit seinen aktuellen Hidden-State Xn erkennen und weiterhin das Nutzer Profil abgleichen.
<Carloss><ID_OwnerMobiles|Endgerät|ID_OwnerFzg<vermisst><NutzerProfil>
<HiddenStateNumber>

### 4. Ablaufdiagramm (Fig. 5)

Die Implementierung erfolgt in allen Basiseinheiten und der Markiereinheit, so dass jeder Teilnehmer einen Sendeplan aus den Übergangsmatrizen und der Beobachtungsmatrix erstellen kann.

### 5. TAG Hardware

Minimale Hardware-Anforderungen an das TAG sind in Fig. 2 ersichtlich. Auch TAGs ohne Bewegungssensor sind möglich, jedoch wird die Batterielebenszeit deutlich verringert.

Insgesamt zeigt das Beispiel, wie durch die Erfindung ein Verfahren zur Ortung von einem Gegenstand mittels einer Markiereinheit ohne ortsbestimmenden Sensor bereitgestellt werden kann.

### Bezugszeichenliste

- 10: System
- 11: Markiereinheit
- 12: Basiseinheit
- 13: Basiseinheit
- 14: Basiseinheit
- 15: Objekt
- 16: Sendebereich
- 17: Suchanfrage
- 18: Server
- 19: Internet
- 20: Sendediagramm
- 21: Antwortdiagramm
- 22: Kommunikationseinrichtung
- 23: Funkverbindung
- 24: Sendeplan
- 25: Suchmaßnahme
- 26: Suchtelegramm
- 27: Suchanfrage
- 28: Fremdeinheiten
- 29: Internetverbindung
- 30: Fremdfahrzeug
- 31: Sendeeinrichtung
- 32: Empfangseinrichtung
- 33: Funkschnittstelle
- 34: Energiespeicher
- 35: Steuereinrichtung
- 36: Bewegungssensor
- 37: Zeitgeber
- 38: Bewegungsprofil
- 39: Geschätzte Basiseinheit
- 40: Nutzungsprofil
- 41: Hidden-Markov-Modell
- 42: Modellzustand
- 43: Übergangswahrscheinlichkeit
- 44: Beobachtungswahrscheinlichkeit
- 45: Verfahren
- 46: Lernmodus
- 47: Übergangsmatrizen
- 48: Beobachtungsmatrizen
- 49: Zähler
- 50: Zähler
- M1: Synchronmodus
- M2: Suchmodus
- T: Synchronisationszeitpunkt

## Patentansprüche

1. Verfahren (45) zum Lokalisieren einer Markiereinheit (11) eines Objekts (15) mittels mehrerer Basiseinheiten (12, 13, 14), wobei die Markiereinheit (11) zum Lokalisieren ermittelt, ob sie sich in einem Empfangsbereich der mehreren Basiseinheiten (12, 13, 14) befindet, indem die Markiereinheit (11) während zumindest eines vorbestimmten Sendezeitpunkts (T) ein Sendetelegramm (20) aussendet und eine Empfangseinrichtung (32) betreibt, um ein Antworttelegramm (21) aus einer der mehreren Basiseinheiten (12, 13, 14) als Antwort auf das jeweilige Sendetelegramm (20) zu empfangen, wobei in einem Synchronmodus (M1) die Markiereinheit (11) mittels eines vorbestimmten, einer der mehreren Basiseinheiten (12, 13, 14) zugeordneten und in dem Synchronmodus (M1) verwendeten Sendeplans (24) den zumindest einen Sendezeitpunkt (T) festlegt, wobei in dem Synchronmodus (M1) die Markiereinheit (11) zum Ermitteln des Sendeplans (24) mittels eines Bewegungssensors (36) ihr aktuelles Bewegungsprofil (38) ermittelt und in Abhängigkeit von dem ermittelten aktuellen Bewegungsprofil (38) mittels eines Nutzungsmodells (40), welches eine Angabe einer geschätzten Basiseinheit (12, 13, 14) zu dem ermittelten Bewegungsprofil (38) erzeugt, schätzt, welche der mehreren Basiseinheiten (12, 13, 14) sich aktuell in Sendereichweite (16) befinden müsste, und in Abhängigkeit von der geschätzten Basiseinheit (39) den der geschätzten Basiseinheit (39) zugeordneten Sendeplan (24) auswählt.

2. Verfahren (45) nach Anspruch 1, wobei die Markiereinheit (11) in dem Synchronmodus (M1) die Empfangseinrichtung (32) nur im Zusammenhang mit dem Aussenden des zumindest einen Sendetelegramms (20) betreibt.

3. Verfahren (45) nach einem der vorhergehenden Ansprüche, wobei für den Fall, dass ein Sendetelegramm (20) oder eine vorbestimmte Anzahl von aufeinanderfolgenden Sendetelegrammen (20) unbeantwortet bleibt, und/oder für den Fall, dass durch das Nutzungsmodell (40) signalisiert wird, dass das aktuelle Bewegungsprofil (38) nicht zuordenbar ist, die Markiereinheit (11) von dem Synchronmodus (M1) in einen Suchmodus (M2) umschaltet, in welchem die Markiereinheit (11) Sendetelegramme (11) mit einer im Vergleich zum Synchronmodus (M2) höheren Senderate aussendet und/oder in welchem die Markiereinheit (11) die Empfangseinrichtung (32) zusätzlich auch unabhängig von dem Aussenden der Sendetelegramme (20) betreibt, um vorbestimmte Suchtelegramme (26) zu empfangen.

4. Verfahren (45) nach einem der vorhergehenden Ansprüche, wobei für den Fall, dass ein Sendetelegramm (20) durch ein Antworttelegramm (21) beantwortet wird, die Markiereinheit (11) als tatsächliche aktuelle, in der Sendereichweite (16) befindliche Basiseinheit (12) eine in dem Antworttelegramm (21) enthaltene Kennung der antwortenden Basiseinheit (12) speichert und/oder einen Sendeplan (24) für die tatsächlichen in Sendereichweite (15) befindliche Basiseinheit (12) zum Ermitteln zumindest eines weiteren Sendezeitpunkts nutzt.

5. Verfahren (45) nach Anspruch 4, wobei für den Fall, dass sich die geschätzte und die tatsächliche Basiseinheit (12) unterscheiden, das Nutzungsmodell (40) mittels eines vorbestimmten Lernalgorithmus (51) angepasst wird.

6. Verfahren (45) nach einem der vorhergehenden Ansprüche, wobei als Nutzungsmodell (40) ein Hidden-Markov-Modell (41) betrieben wird.

7. Verfahren (45) nach einem der vorhergehenden Ansprüche, wobei zum Bilden des Nutzungsmodells (40) die Markiereinheit (11) in einem Lernmodus (46) betrieben wird, in welchem die Markiereinheit (11) mittels des Bewegungssensors (36) und/oder mittels eines Bewegungssensors eines mobilen Endgeräts Bewegungsprofile (38) der mehreren Basiseinheiten (12, 13, 14) ermittelt und in dem Nutzungsmodell (40) eine Zuordnung jedes der Bewegungsprofile (38) zu jeweils derjenigen Basiseinheit (12, 13, 14), zu der das jeweilige Bewegungsprofil (38) jeweils gehört, vornimmt.

8. Verfahren (45) nach einem der vorhergehenden Ansprüche, wobei jedes Sendetelegramm (20) als Broadcast-Nachricht ausgesendet wird.

9. Markiereinheit (11) zum Markieren eines Objekts (15), wobei die Markiereinheit (11) eine Sendeeinrichtung (31) zum Senden von Sendetelegrammen (20) und eine Empfangseinrichtung (32) zum Empfangen von Antworttelegrammen (21) und Suchtelegrammen (26) aufweist, wobei eine Steuereinrichtung (35) der Markiereinheit (11) dazu eingerichtet ist, ein Verfahren (45) nach einem der vorhergehenden Ansprüche durchzuführen.

10. Markiereinheit (11) nach Anspruch 9, wobei die Markiereinheit (11) einen Bewegungssensor (36) aufweist und ein Empfänger für ein Positionssignal eines GNSS fehlt.

11. System mit mehreren Basiseinheiten (12, 13, 14) zum Kommunizieren mit einer Markiereinheit (11) nach Anspruch 9 oder 10, wobei die mehreren Basiseinheiten (12, 13, 14) eine Kommunikationseinrichtung (22) zum Empfangen zumindest eines Sendetelegramms (20) aus der Markiereinheit (11) und zum Aussenden eines Antworttelegramms (21) mit einer Kennung der jeweiligen Basiseinheit (12, 13, 14) aufweisen und wobei die mehreren Basiseinheiten (12, 13, 14) dazu eingerichtet sind zu überprüfen, ob das zumindest eine Sendetelegramm (20) gemäß einem vorbestimmten, der jeweiligen Basiseinheit zugeordneten Sendeplan (24) eintrifft, und falls ein gemäß dem Sendeplan (24) erwartetes Sendetelegramm (24) oder eine vorbestimmte Anzahl von gemäß dem Sendeplan (24) erwarteten aufeinanderfolgenden Sendetelegrammen (20) ausbleibt, die Markiereinheit (11) als verloren oder vermisst eingestuft wird, und die mehreren Basiseinheiten (12, 13, 14) dazu eingerichtet sind, als Reaktion eine vorbestimmte Suchmaßnahme (25) auszulösen.

12. System nach Anspruch 11, wobei die Suchmaßnahme (25) umfasst, dass die mehreren Basiseinheiten (12, 13, 14) zumindest einer vorbestimmten anderen Basiseinheit (12, 13, 14) und/oder zumindest einer vorbestimmten, als eine technische Sendeeinrichtung oder Kommunikationseinrichtung ausgebildeten Fremdeinheit (28) signalisiert, in ihrem jeweiligen Sendebereich ein Suchtelegramm (26) an die Markiereinheit (11) auszusenden.

13. System nach Anspruch 11 oder 12, wobei die mehreren Basiseinheiten (12, 13, 14) dazu eingerichtet sind, für den Fall, dass ein Sendetelegramm (20) von der Markiereinheit (11) eintrifft, an zumindest einen vorbestimmten Empfänger zu signalisieren, dass sich die Markiereinheit (11) bei der jeweiligen Basiseinheit (12, 13, 14) befindet.

## Claims

1. Method (45) for localizing a marking unit (11) of an object (15) by means of a plurality of base units (12, 13, 14), wherein, for localizing, the marking unit (11) determines whether it located in a reception area of the plurality of base units (12, 13, 14), in that the marking unit (11) emits a transmission telegram (20) during at least one prespecified transmission point in time (T), and operates a receiving device (32) in order to receive a response telegram (21) from one of the plurality of base units (12, 13, 14) as a response to the respective transmission telegram (20),
wherein, in a synchronous mode (M1), the marking unit (11) defines the at least one transmission point in time (T) by means of a prespecified transmission plan (24) associated with one of the plurality of base units (12, 13, 14) and used in the synchronous mode (M1),
wherein, in the synchronous mode (M1), the marking unit (11), in order to determine the transmission plan (24), determines its current movement profile (38) by means of a movement sensor (36) and, depending on the determined current movement profile (38), estimates, by means of a usage model (40) which generates an indication of an estimated base unit (12, 13, 14) with respect to the determined movement profile (38), which of the plurality of base units (12, 13, 14) would need to currently be in transmission range (16) and, depending on the estimated base unit (39), selects the transmission plan (24) associated with the estimated base unit (39).

2. Method (45) according to Claim 1, wherein the marking unit (11), in synchronous mode (M1), operates the receiving device (32) only in conjunction with the transmission of the at least one transmission telegram (20).

3. Method (45) according to one of the preceding claims, wherein, in the event that a transmission telegram (20) or a prespecified number of successive transmission telegrams (20) remains unanswered, and/or in the event that, via the usage model (40), it is signaled that the current movement profile (38) cannot be associated, the marking unit (11) switches over from the synchronous mode (M1) into a search mode (M2) in which the marking unit (11) transmits transmission telegrams (11) at a transmission rate which is higher than in synchronous mode (M2), and/or in which the marking unit (11) operates the receiving device (32) additionally and independently of the transmission of the transmission telegrams (20) in order to receive prespecified search telegrams (26).

4. Method (45) according to any one of the preceding claims, wherein, in the event that a transmission telegram (20) is answered by a response telegram (21), the marking unit (11), as an actual current base unit (12) located in the transmission range (16), stores an identifier, contained in the response telegram (21), of the responding base unit (12) and/or uses a transmission plan (24) for the actual base unit (12) located in the transmission range (15) in order to determine at least one further transmission point in time.

5. Method (45) according to Claim 4, wherein, in the event that the estimated and the actual base units (12) differ, the usage model (40) is adapted by means of a prespecified learning algorithm (51).

6. Method (45) according to any one of the preceding claims, wherein a hidden Markov model (40) is operated as a usage model (41).

7. Method (45) according to any one of the preceding claims, wherein, in order to form the usage model (40), the marking unit (11) is operated in a learning mode (46) in which the marking unit (11) determines movement profiles (38) of the plurality of base units (12, 13, 14) by means of the movement sensor (36) and/or by means of a movement sensor of a mobile terminal device, and in the usage model (40) effects an association of each of the movement profiles (38) with that respective base unit (12, 13, 14) to which the respective movement profile (38) respectively belongs.

8. Method (45) according to any one of the preceding claims, wherein each transmission telegram (20) is sent as a broadcast message.

9. Marking unit (11) for marking an object (15), wherein the marking unit (11) has a transmitting device (31) for sending transmission telegrams (20) and a receiving device (32) for receiving response telegrams (21) and search telegrams (26), wherein a control device (35) of the marking unit (11) is configured to perform a method (45) according to any one of the preceding claims.

10. Marking unit (11) according to Claim 9, wherein the marking unit (11) has a movement sensor (36) and there is no receiver for a position signal of a GNSS.

11. System having a plurality of base units (12, 13, 14) for communicating with a marking unit (11) according to Claim 9 or 10, wherein the plurality of base units (12, 13, 14) have a communication device (22) for receiving at least one transmission telegram (20) from the marking unit (11) and for transmitting a response telegram (21) with an identifier of the respective base unit (12, 13, 14), and wherein the plurality of base units (12, 13, 14) are configured to check whether the at least one transmission telegram (20) arrives according to a prespecified transmission plan (24) associated with the respective base unit and, in the event of non-arrival of a transmission telegram (24) expected according to the transmission plan (24), or of a predetermined number of successive transmission telegrams (20) expected according to the transmission plan (24), the marking unit (11) will be classified as lost or missing, and the plurality of base units (12, 13, 14) are configured to initiate a prespecified search measure (25) as a reaction.

12. System according to Claim 11, wherein the search measure (25) comprises that the plurality of base units (12, 13, 14) signals to at least one prespecified other base unit (12, 13, 14), and/or to at least one prespecified external unit (28) designed as a technical transmission device or communication device, to transmit a search telegram (26) to the marking unit (11) within its respective transmission region.

13. System according to Claims 11 or 12, wherein the plurality of base units (12, 13, 14) are configured, in the event that a transmission telegram (20) arrives from the marking unit (11), to signal to at least one prespecified receiver that the marking unit (11) is located at the respective base unit (12, 13, 14).

## Revendications

1. Procédé (45) pour localiser un marqueur (11) d'un objet (15) à l'aide de plusieurs unités de base (12, 13, 14), dans lequel le marqueur (11) détermine, pour la localisation, si elle se trouve dans une zone de réception des plusieurs unités de base (12, 13, 14), en ce que le marqueur (11) émet un télégramme d'émission (20) durant au moins un instant d'émission (T) prédéfini et fait fonctionner un dispositif de réception (32), afin de recevoir un télégramme de réponse (21) en provenance d'une des plusieurs unités de base (12, 13, 14) en réponse au télégramme d'émission (20) respectif,
dans lequel, dans un mode synchrone (M1), le marqueur (11) définit l'au moins un instant d'émission (Y) au moyen d'un plan d'émission (24) prédéfini associé à une des plusieurs unités de base (12, 13, 14) et utilisé dans le mode synchrone (M1),
dans lequel, dans le mode synchrone (M1), le marqueur (11) détermine son profil de déplacement (38) actuel au moyen d'un capteur de déplacement (36) pour déterminer le plan d'émission (24) et, en fonction du profil de déplacement (38) actuel déterminé, estime, au moyen d'un modèle d'utilisation (40), qui produit une indication d'une unité de base (12, 13, 14) estimée par rapport au profil de déplacement (38) déterminé, laquelle parmi les plusieurs unités de base (12, 13, 14) devrait se trouver actuellement dans la portée d'émission (16) et, en fonction de l'unité de base (39) estimée, sélectionne le plan d'émission (24) associé à l'unité de base (39) estimée.

2. Procédé (45) selon la revendication 1, dans lequel le marqueur (11), dans le monde synchrone (M1), ne fait fonctionner le dispositif de réception (32) qu'en relation avec l'émission de l'au moins un télégramme d'émission (20).

3. Procédé (45) selon l'une quelconque des revendications précédentes, dans lequel dans le cas où un télégramme d'émission (20) ou un nombre prédéfini de télégrammes d'émission (20) consécutifs reste sans réponse et/ou dans le cas où il est signalé, par le modèle d'utilisation (40), que le profil de déplacement (38) actuel ne peut pas être attribué, le marqueur (11) passe du mode synchrone (M1) à un mode de recherche (M2), dans lequel le marqueur (11) émet des télégrammes d'émission (11) avec un débit d'émission plus élevé par comparaison avec le mode synchrone (M2) et/ou dans lequel l'unité de marquage (11) fait fonctionner le dispositif de réception (32) de plus également indépendamment de l'émission des télégrammes d'émission (20), afin de recevoir des télégrammes de recherche (26) prédéfinis.

4. Procédé (45) selon l'une quelconque des revendications précédentes, dans lequel dans le cas où un télégramme d'émission (20) reçoit une réponse par le biais d'un télégramme de réponse (21), le marqueur (11) mémorise, en tant qu'unité de base (12) actuelle se trouvant réellement dans la portée d'émission (16), un identifiant contenu dans le télégramme de réponse (21) de l'unité de base (12) répondante et/ou utilise un plan d'émission (24) pour l'unité de base (12) se trouvant réellement dans la portée d'émission (15) pour déterminer au moins un autre instant d'émission.

5. Procédé (45) selon la revendication 4, dans lequel dans le cas où l'unité de base (12) estimée et l'unité réelle diffèrent, le modèle d'utilisation (40) est adapté au moyen d'un algorithme d'apprentissage (51) prédéfini.

6. Procédé (45) selon l'une quelconque des revendications précédentes, dans lequel un modèle de Markov caché (41) est utilisé en guise de modèle d'utilisation (40).

7. Procédé (45) selon l'une quelconque des revendications précédentes, dans lequel, pour la construction du modèle d'utilisation (40), l'unité de marquage (11) est exploitée dans un mode d'apprentissage (46), dans lequel le marqueur (11) détermine, au moyen du capteur de déplacement (36) et/ou au moyen d'un capteur de déplacement d'un terminal mobile, des profils de déplacement (38) des plusieurs unités de base (12, 13, 14) et réalise, dans le modèle d'utilisation (40), une attribution de chacun des profils de déplacement (38) à l'unité de base (12, 13, 14) respective, à laquelle le profil de déplacement (38) respectif appartient.

8. Procédé (45) selon l'une quelconque des revendications précédentes, dans lequel chaque télégramme d'émission (20) est émis sous forme de message de diffusion.

9. Unité de marquage (11) pour marquer un objet (15), dans laquelle le marqueur (11) comporte un dispositif d'émission (31) pour émettre des télégrammes d'émission (20) et un dispositif de réception (32) pour recevoir des télégrammes de réponse (21) et des télégrammes de recherche (26), dans laquelle un dispositif de commande (35) du marqueur (11) est conçu pour réaliser un procédé (45) selon l'une quelconque des revendications précédentes.

10. Unité de marquage (11) selon la revendication 9, dans laquelle l'unité de marquage (11) comporte un capteur de déplacement (36) et est dépourvue d'un récepteur pour un signal de position d'un GNSS.

11. Système comprenant plusieurs unités de base (12, 13, 14) pour communiquer avec une unité de marquage (11) selon la revendication 9 ou 10, dans lequel les plusieurs unités de base (12, 13, 14) comportent un dispositif de communication (22) pour recevoir au moins un télégramme d'émission (20) en provenance du marqueur (11) et pour émettre des télégrammes de réponse (21) avec un identifiant de l'unité de base (12, 13, 14) respective et dans lequel les plusieurs unités de base (12, 13, 14) sont conçues pour vérifier si l'au moins un télégramme d'émission (20) entre selon un plan d'émission (24) prédéfini attribué à l'unité de base respective et, si un télégramme d'émission (24) attendu selon le plan d'émission (24) ou un nombre prédéfini de télégrammes d'émission (20) consécutifs attendus selon le plan d'émission (24) sont absents, l'unité de marquage (11) est classée comme perdue ou disparue et les plusieurs unités de base (12, 13, 14) sont conçues pour déclencher, en guise de réaction, une mesure de protection (25) prédéfinie.

12. Système selon la revendication 11, dans lequel la mesure de protection (25) comprend que les plusieurs unités de base (12, 13, 14) signalent à au moins une autre unité de base (12, 13, 14) prédéfinie et/ou à au moins une unité étrangère (28) prédéfinie conçue comme un dispositif de communication ou un dispositif d'émission technique, d'émettre un télégramme de recherche (26) pour l'unité de marquage (11) dans sa portée d'émission respective.

13. Système selon la revendication 11 ou 12, dans lequel les plusieurs unités de base (12, 13, 14) sont conçues pour, dans le cas où un télégramme d'émission (20) provient du marqueur (11), signaler à au moins un récepteur prédéfini, que le marqueur (11) se trouve près de l'unité de base (12, 13, 14) respective.
